# EUROPEAN PATENT APPLICATION

(11) **EP 2 752 117 A1**
(43) Date of publication of application: **09.07.2014**
(21) Application number: 13396001.3
(22) Date of filing: 07.01.2013
(51) Int. Cl.: A21C 15/04, B26D 1/52, B26D 1/54

(54) **A device meant for slicing of bakery products**

(71) Applicant: Ipeka Automation Oy, 37800 Toijala (FI)
(72) Inventor: Rinne, Arto, 37800 Toijala (FI)
(74) Representative: Nieminen, Taisto Tapani

(57) **Abstract**

Device meant for slicing bakery products (18) which device comprises several parallel saw bands (3) which are directed through rotatable drums (1,2) to move through the location meant for the slicing, comprises control devices (7,8,14) for directing the saw bands (3) into the right position at the slicing point and for adjusting the thickness of the slices to be created and a conveyance track (19) for moving the bakery products (18) to be sliced by the blades (3) and for moving further onwards from the slicing point. The control devices comprise a group of hole elements (8,14) which are moveable in a sideways direction while resting on a common bar (9) the each hole of which hole elements is adjusted to receive the saw band (3) meant for it, each hole element (8, 14) can be brought farther away and brought closer in relation to the adjacent hole element (8, 14) with the help of a sleeve (10) adjusted to each hole element (8, 14) and adjusted to be resting on the mentioned bar (9) in which case the sleeve (10) is attached to the spiral hole (12) belonging to the hole element (8, 14) with the help of a wire-wrap so that by rotating the bar (9) the sleeve (10) moves in a sideways direction in relation to the side of the hole element (8, 14) when the sleeve rotates and increases or decreases the mutual distance of the hole elements (8, 14).

## Description

The object of the invention is a device meant for slicing bakery products which device comprises several adjacent saw bands which saw bands are directed to move through rotatable drums through a location meant for slicing, control devices in order to direct the saw bands into the right position at a slicing point and in order to adjust the thickness of the slices being created and a conveyance track in order to move the bakery products to be sliced by the saw bands and further to be moved onwards from the slicing point.

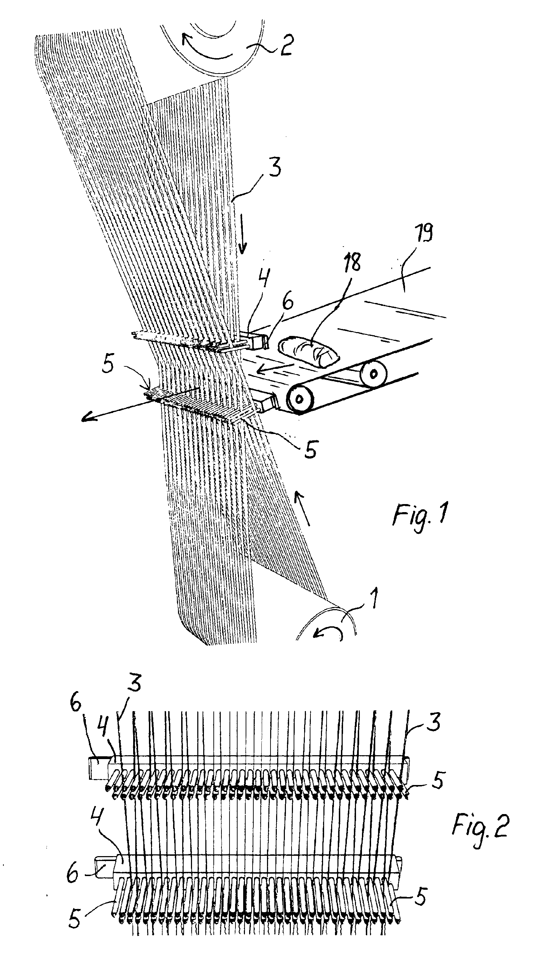

Slicing devices according to the above mentioned preamble are previously known from the figures 1 and 2 (Prior Art) in which figures the adjusting of a distance of the saw bands, in other words the adjusting of a distance determining the slicing thickness is shown with the help of pegs attached to the horizontal balk of the control device in which case the saw bands are adjusted to move in the gaps of the pegs. The disadvantage of this kind of control device is the fact that a separate control device which can be changed must be available for each wanted thickness for changing the slicing thickness. These control devices differ from each other regarding the blade spaces which are formed with the help of pegs. The changing of the control devices takes time and they must be available in store as various models.

In order to remove these disadvantages a new control device has been developed with the help of which control device the slicing thickness can easily be adjusted without having to change the control device. It is characteristic of the control device according to the invention that control devices comprise a group of hole elements which can be moved in a sideways direction while resting on a common bar the each hole of which hole elements is adjusted to receive a saw band meant for it, each hole element can be brought farther away and brought closer in relation to the adjacent hole element with the help of a sleeve adjusted to each hole element and adjusted to be resting on the mentioned bar in which case the sleeve is attached to the spiral hole belonging to the hole element with a wire-wrap in such a way that by rotating the bar the sleeve, when it is being rotated, moves in a sideways direction in relation to the side of the hole element and increases or decreases the mutual distance of the adjacent hole elements.

The advantage of the invention is the fact that the mutual distance of the saw bands used for slicing can easily be adjusted without stages when it occurs only by rotating the bar with the desired amount. With the rotation of the bar the movement of the elements controlling the position of all the saw bands is adjusted. When the adjusting is being performed no part needs to be changed. Thus the adjusting occurs fast. The distance of all the blades from each other changes the same amount and at the same time.

In the following the invention is described more detailed by referring to the accompanying drawing in which
Figure 1 shows a known control device with saw bands diagonally seen.
Figure 2 shows a control device enlarged.
Figure 3 shows a part of a control device according to the invention seen from above when being adjusted into a position in which the blades are located closest to each other.
Figure 4 shows a control device in which the blades are adjusted to be furthest away from each other.
Figure 5 shows the body of the control device as a section view.
Figure 6 shows the control device seen in the direction of the bar performing adjusting.

A previously known slicing device (Prior Art) is shown in the figures 1 and 2 in which slicing device the distance of the pegs 5, which are attached to the horizontal balk 4 of the control device, determines the distance of the saw bands 3, in other words the slicing thickness. The saw bands 3 are adjusted to move in the gaps of the pegs 5. For the changing of the slicing thickness there must be a separate, changeable control device with a desired peg space for each wanted thickness. The product 18 to be sliced is fed to the blades 3 in the direction of the arrow for example by using a belt conveyor 19. The saw bands 3 are located next to each other and crosswise in order to move through the drums 1 and 2. Blade parts which move both up and downwards are turned towards the product 18 to be sliced with the help of a control device. An attachment balk 6 is coupled to the slicing device for fastening the control device thereto.

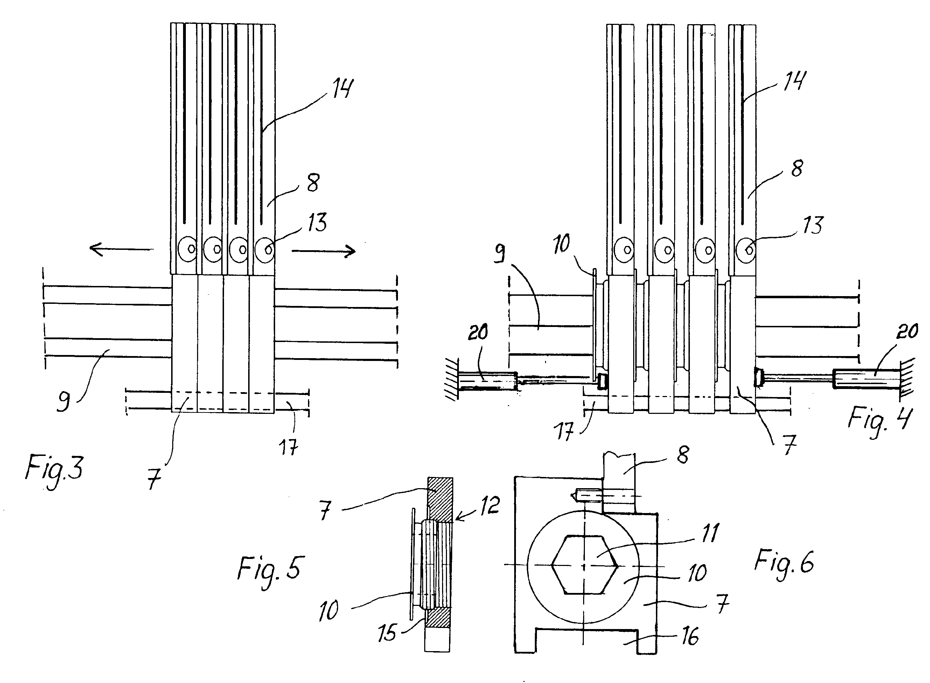

The control device according to the invention which adjusts the distance of the blades 3 is shown in the figure 3 said device comprises control devices 7, 8, 14 which are located to be resting on the horizontal bar 9 and direct the blades 3 which control devices comprise body parts 7 which are located next to each other and hole elements 8, 14 which can be attached to the body parts 7 for example with screws. The hole element is an arm 8 into which a hole 14 has been made for the blade 3.

In figure 3 hole elements 8, 14 are at their closest while resting on the bar 9 determining the narrowest slice thickness. In figure 4 the control devices 7, 8, 14 are adjusted for the broadest slice thickness in which case the body parts 7 are brought farther away from each other.

The separation of the body parts 7 and the adjusting of the slice thickness at the same time occurs with the help of the rotation of the bar 9. Body parts 7 comprise a spiral hole 12 according to the figure 5 and comprise a sleeve 10 which can be rotated in the spiral hole which sleeve moves in the sideways direction due to the wire-wrap when the sleeve 10 is being rotated in the spiral hole 12. The sideway movement separates the body parts 7 from each other and correspondingly they can be moved closer when the sleeve 10 is being rotated inside the hole 12. The sleeve 10 comprises a hole 11 which hole is adjusted according to the bar 9 when the bar is being slipped through the holes 11. The bar 9 is most advantageously a polygon. The control devices 7, 8, 14 must stay without rotating even though the bar 9 is being rotated. Thus the rotating of the body parts 7 is prevented with the help of a horizontal bar 17 shown in the figures 3 and 4 which horizontal bar is located to move through the groove 16 of the body parts 7. Also the body parts 7 can have holes through which the horizontal bar 17 is directed. The horizontal bar 17 is attached to the body of the slicing machine.

The control devices 7, 8, 14 shown in the figures 3-6 can be adjusted to the slicing device shown in the figure 1 in order to direct the saw bands 3 at the same location as in the figure 1 when the blades 3 are moving crosswise and when the control devices are located both above and underneath the product to be sliced 18.

Compressed air cylinders 20 which have a connection to the farthermost body parts 7 are shown in the figure 4 with the help of which cylinders the control device assembly stays concisely against each other and the body parts 7 also return from the wider slice thickness position to the narrower slice thickness being pushed by the mentioned cylinders when this kind of adjustment is being performed. Instead of compressed air cylinders 20 also various spring arrangements can be used for this purpose.

## Claims

1. A device meant for slicing bakery products (18) which device comprises
- several parallel saw band s (3) which are directed through rotatable drums (1, 2) to move through a location meant for slicing,
- control devices (7, 8, 14) in order to control the saw bands (3) into the right position at the slicing point and in order to adjust the thickness of the slices to be created, and
- a conveyance track (19) for moving the bakery products (18) to be sliced by the blades (3) and to be moved further onwards from the slicing point,
**characterized in that** control devices comprise a group of hole elements (8,14) which can be moved in a sideways direction while resting on a common bar (9), each hole (14) of which hole elements is adjusted to receive the saw band (3) meant for it, each hole element (8, 14) can be brought farther away and brought closer in relation to the adjacent hole element (8, 14) with the help of a sleeve (10) adjusted to each hole element (8, 14) and adjusted to be resting on the mentioned bar (9) in which case the sleeve (10) is attached to a spiral hole (12) belonging to the hole element (8, 14) with the help of a wire-wrap so that by rotating the bar (9) the sleeve (10) moves in a sideways direction in relation to the side of the hole element (8,14) when the sleeve is being rotated and increases or decreases the mutual distance of the adjacent hole elements (8, 14).

2. Device according to the claim 1, **characterized in that** there are control devices above and underneath the slicing point.

3. Device according to the claim 1, **characterized in that** the body part (7) of the control devices (7, 8, 14) comprises a groove (16) or a hole through which a bar (17) preventing the rotation of the body part (7) is adjusted to move.

4. Device according to the claim 1, **characterized in that** in the sleeve (10) there is a flange part which widens the diameter of the sleeve which flange part is adjusted to push the adjacent body part (7) in a sideways direction.

5. Device according to the claim 1, **characterized in that** the bar (9) is a polygon.
